# EUROPEAN PATENT APPLICATION

(11) **EP 0 681 881 A1**
(43) Date of publication of application: **15.11.1995**
(21) Application number: 95200420.8
(22) Date of filing: 21.02.1995
(51) Int. Cl.: B23B 39/20

(54) **Improvement to multi-spindled transfer machines for machining cycles**

(30) Priority: 13.05.1994 IT TO940388
(71) Applicant: TECNOMECCANICA G.R.W. S.r.l., I-10070 Grosso Canavese, Turin (IT)
(72) Inventor: Cerva, Pierangelo, I-10070 Grosso Canavese, Turin (IT)
(74) Representative: de Blasio, Francesco, Dipl.-Ing.

(57) **Abstract**

Improvement relating to transfer machines according to which on the work bench (1) of the machine one or more supports (2) are applied, each support being for a revolving drum (3) with blocking devices such as radial vices (4) for pieces being machined, and one or more turrets (5) with frontal spindles (6); said turrets being mounted slidable on guides (7) parallel the one to the other and to the horizontal axis of a corresponding drum (3). The outside sides of the turret(s) (5) and support(s) (2) are thereby surrounded by free space as is the area above the machine as there are no lateral support abutments for the units (3, 5).

## Description

The market of some kinds of operating machines is tied to their continuous technological evolution which is not compatible with investments in machinery and equipment developed for long term production programmes. In fact, the average life time of the majority of the parts produced by said machines is short due to the progressive adjustment of the market to similar parts in a new form, technically more reliable and economically more convenient. This gives rise to the necessity to direct research towards more versatile machinery with work cycles that require less time.

These objective considerations make it necessary to develop machines having a high percentage of standardized components and a limited percentage of components that need to be replaced and which can satisfy specific working requisites without altering the basic and functional characteristics of the machine itself.

The machine according to the subject improvement has been specially designed and developed to include a group of products which, although are of a relatively limited number, cannot be economically conveniently produced with machinery which is part of large work centres with transfer units.

The subject machine has been developed in such a way that it can be rapidly transformed and adapted for the machining of various parts, therefore one of its characteristics is its structure which comprises components that are standardized for about 60% of its overall structure while the remaining 40% can easily be replaced in such a way as to satisfy specific working requisites, as long as such requisites are confined within well defined limits.

One of the purposes of the invention is that of supplying transfer machines which can be associated, either side by side or by longitudinal alignment, to similar machines as long as each machine maintains complete accessibility to the relative kinematic elements such as the spindle carrier turret(s) and/or the revolving work rest drums, allowing for the easy evacuation of the chips.

Another, though not the last, purpose of the invention is that of supplying transfer machines which, thanks to their design, provide for the easy replacement of the spindle carrier turret(s) and/or the revolving drum(s) with similar parts, suitable for different work and which can be purchased separately thus making it more economically convenient for the user who does not have to purchase a new machine for machining different parts.

Bearing in mind the above mentioned purposes, the improvement is characterized by the versatility which, as said, each machine acquires. This versatility derives from the architecture of the machine thanks to which the work rest drum is mounted revolving, on a horizontal axis, on the surface of the work bench of the machines while the spindle carrier turret is mounted slidable, in both directions, on longitudinal guides on axes parallel to the longitudinal axis of the revolving drum. In these conditions, the revolving drum, the spindle carrier turret and the machine as a whole have free space on all sides due to the fact that there are no supports or vertical "abutments", fixed or one against the other, as there are in machinery known to date. Such abutments usually support the operating units being fixed to the structure of the machine and they occupy the space above and at the side of the machine making it difficult, if not impossible, to replace the operating units and the work rest drum during machining.

Another characteristic of the machine is the fact that it is possible to unite in a single unit a plurality of spindles activated into longitudinal movement by a single translation support, with the consequent reduction in the cost of the machine and in the amount of overall space occupied by the operating units. Thanks to the particular arrangement of the spindles on a single support, of the relative guides and movement elements, these parts being directly supported by the work bench together with the revolving drum(s) support, it is possible to eliminate the abutments. This peculiar structure of the machine permits the requisites of accessibility, transformation and use of the machine to be satisfied thanks to the accessibility which allows for the replacement of the operating units.

Thanks to the architecture of the machine, during the various working cycles, tools brought in from out-side operating units can be used or anyway mounted in the space that surrounds the machine; these units can be electronically, pneumatically, hydraulically or mechanically controlled.

The architecture of the machine according to the improvement, as will be described below, furthermore offers a plurality of technical and practical advantages. In fact, not only is the versatility of the machine improved, but said design also offers the possibility of grouping or linking together more than one machine according to any kind of geometry due to the fact that there is free space both to the side and above the machine, thereby allowing for the use of external manipulators which automatically load and/or unload the parts to be machined in the work stations of the revolving drum, as well as for the use of external arms, which can be activated anyway, provided with terminal spindles and/or tools for setting in motion the working phases to be carried out according to transverse direction on some objects.

Another important advantage of the machine according to the invention derives from the rapid and safe evacuation of the chips, an operation which causes a problem in machines which work metal alloys with long chips.

Substantially, the invention concerns a transfer machine, with chip removal and a drum or drums which rotate around horizontal axes, supported by corresponding fixed parts, provided with radial equipment, such as self-centering vices, for blocking parts subject to single and/or multiple working phases, carried out by tools mounted in corresponding spindles carried by one or more coaxial turrets, frontally and individually opposite to corresponding drums; the turret(s) being mounted slidable, in both directions, on horizontal guides fixed to the work bench of the machine, run by numerical control and complete with the servosystems required for its running.

The machine is described below with reference to the attached drawings, merely on an illustrative basis, in which:
- Figure 1 is a perspective view of the machine;
- Figure 2 illustrates a machine provided with two similar drums, placed side by side, with four multispindled units with automatic loaders and a device for evacuating chips;
- Figure 3 is an axonometric view of a single machine illustrating some of the possibilities for intervention on the parts being machined by means of additional units associated to external mechanisms;
- Figures 4 and 5 schematically illustrate two of the possible arrangements of plural units on the same surface of the work bench of a machine according to the improvement;
- Figures 6, 7, 8, 9, 10 and 11 schematically, and in a front view, illustrate several revolving drums with radial blocking means arranged according to various configurations.

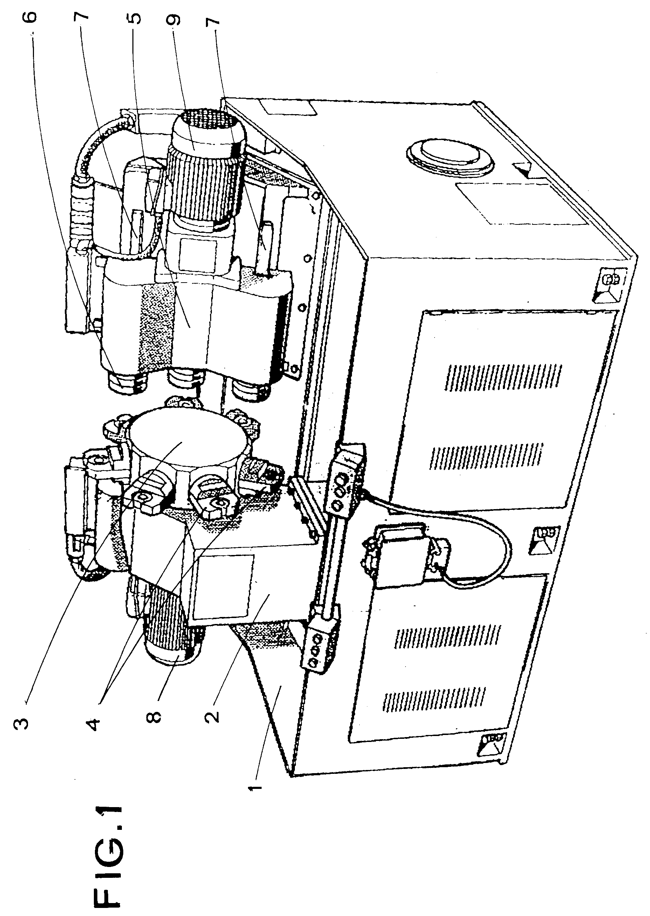

In Figure 1, 1 indicates the surface of the work bench of the machine to which a support 2 is fixed for the revolving drum 3, provided with blocking means such as self-centering radial vices 4 or other blocking devices, constituting stations for the work phases of parts associated to said pieces. The drum 3 can be set into angular motion both in a clockwise and in an anti-clockwise direction. In a frontal position with respect to the drum 3 a turret 5, spindle carrier 6, is mounted slidable in both directions on longitudinal guides 7. The angular motion that can be given to the drum 3, activated intermittently by the motor 8, is at such a range that the mechanical parts being machined, supported by the means 4, can always be found in a frontal position concordant with the tools carried by the spindles 6, whatever the work programme to be carried out may be. Thanks to the total absence of occupancy of the lateral space, there are no obstacles for the chips which are rapidly evacuated while the drum 3 is easily accessible and can easily be replaced with similar drums equipped with different blocking means.

The blocking means 4 can be activated either pneumatically, hydraulically or mechanically. Only one electric motor 9 or single motors can be arranged for the rotary movement of the spindles 6. The number of said spindles may vary from two to four.

The basic structure of the machine foresees a drum 3 provided with a number of blocking means, or stations 4, variable from three to eight, which can be used according to the various work requisites. Normally, two of these stations are used for loading and unloading the pieces, both for the manual loading-unloading version and the automatic loading-unloading version. Two, three or four stations are normally used for frontal machining carried out by the multi-spindled units 6. The remaining stations can be equipped with units and devices for carrying out various work, both frontally and transversally or radially with respect to the parts blocked by the means 4.

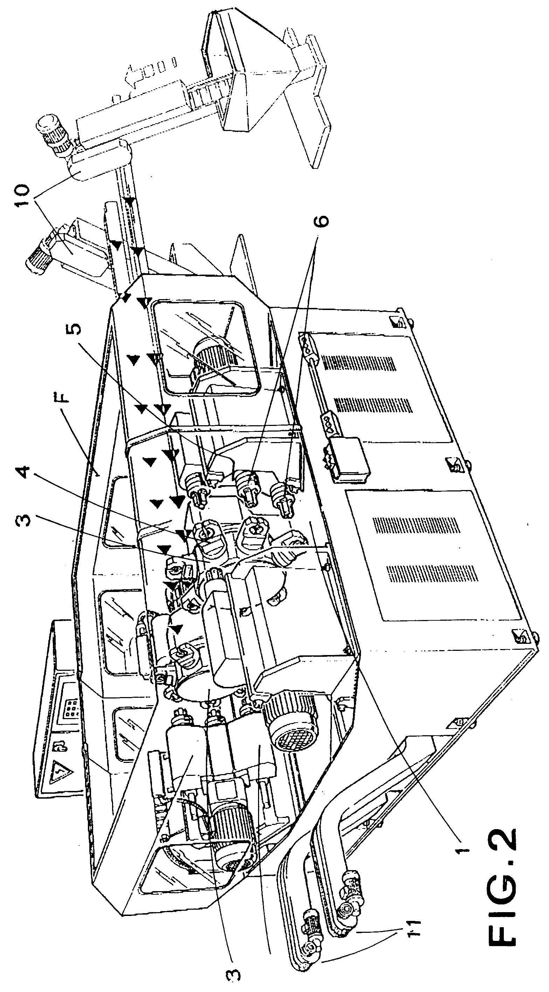

Figure 2 illustrates one of the possibilities for associating a plurality of units and drums. Four multispindled units can easily be associated to form a group suitable for particular work cycles comprising more than one phase, or simply in order to restrict the area occupied by two or more machines. This possibility is allowed thanks to the particular structure of the subject machine in that it is accessible both laterally and from above.

The units illustrated in Figure 2 are provided with devices 10, 11 for automatically loading and unloading the parts to be machined and a device for automatically evacuating the chips.

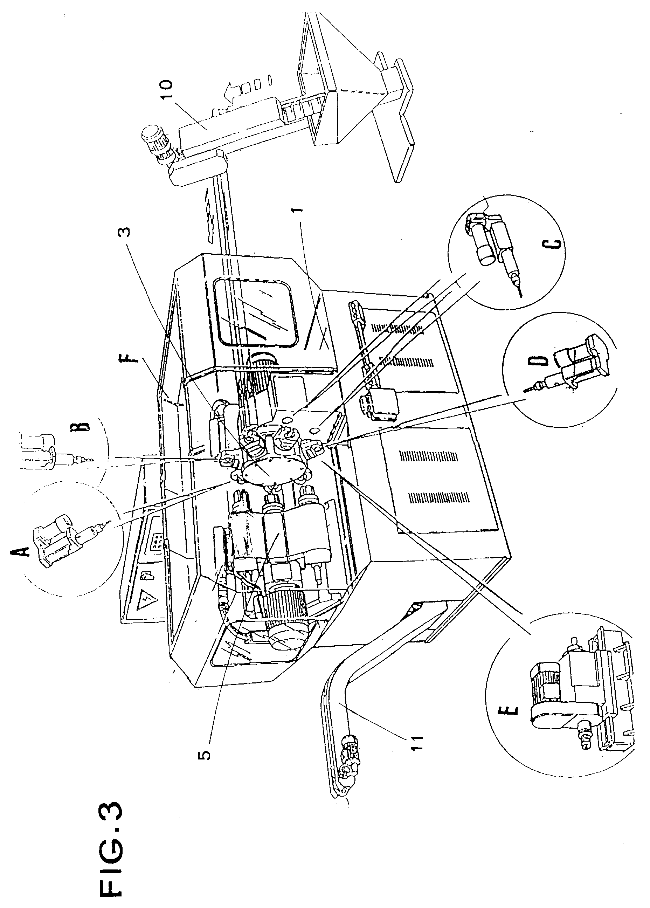

As illustrated in Figure 3, each machine, thanks to its structure, is extremely versatile, capable of cooperating with joined units -A, B, C, D- for radial operations to be carried out on the parts being machined and capable of receiving the devices -E-, which can be temporarily applied to the work bench 1 for machining to be carried out on the parts blocked by the means 4, work which cannot be carried out by the tools associated to the spindles 6.

A plurality of machines can be joined together side by side or longitudinally aligned and supplied with known servomechanisms and, if required, can be surrounded by a protective enclosure -F-, Figure 2, provided with transparent windows and access doors.

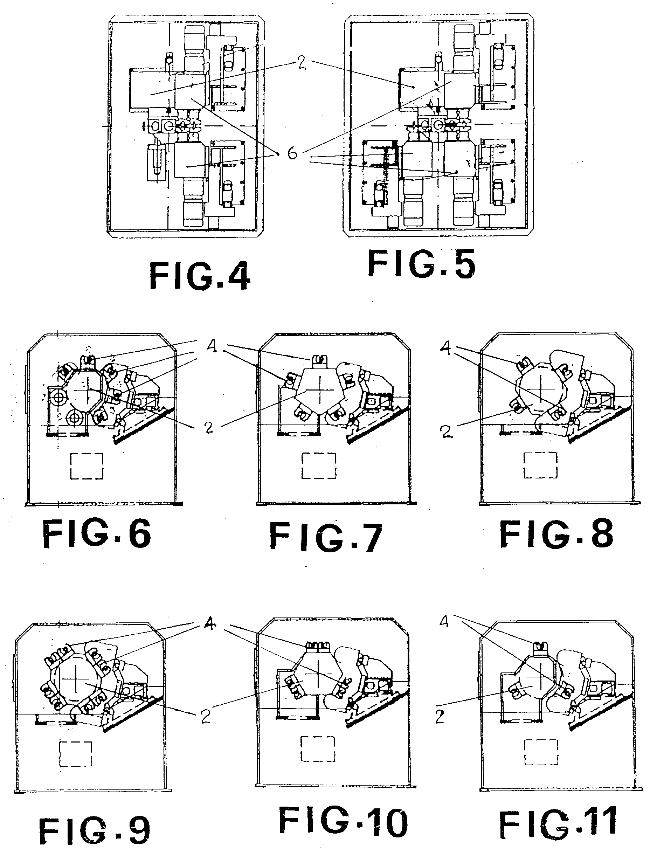

As illustrated in Figures 4 and 5, thanks to the elimination of the well-known "abutments" fixed opposite one another, on the surface of the work bench of each machine a mono-drum 3 can be applied, revolving on a fixed support and more than one multi-spindled unit 5, 6, also axially juxtaposed with respect to the parts being machined. This particular and advantageous arrangement cannot be achieved with machines having a traditional structure.

With reference to Figures 6, 7, 8, 9, 10 and 11, the easy access to the drum 3, deriving from the architecture of the machine, allows for the rapid replacement of the drum, therefore seven station drums, Figure 6, or five station drums, Figure 7, or four station drums, Figure 8, or drums with coupled stations, arranged at 90°, Figure 9, or again with coupled or single stations arranged at 120°, Figures 10 and 11 can be alternated on the same turret 2. The possibility to easily replace the drum 2 with a similar drum having specific characteristics to satisfy particular work requisites can be interpreted as an important economic factor in that it considerably expands the versatility of one single machine.

## Claims

1. Multispindled transfer machine for mechanical work cycles, comprising a work bench (1) which supports at least one group with a revolving drum (3) provided with radial blocking means (4) for parts being machined; said drum frontally faces at least one turret (5) with tool-carrier spindles (6), characterized by the fact that each revolving drum (3) and blocking means (4) group comprises a support (2) fixed to the surface of the work bench (1) while at least one turret (5) with sprindles (6) is mounted slidable on longitudinal guides (7), fixed to the work bench (1), with axes parallel to the common axes of the turret (5) and of the drum (3), further characterized by the fact that the outside opposite sides of the support (2) and of the turret (5) as well as the opposite sides of the work bench (1) and the space above said groups are completely free and empty in that the structure of the machine has no lateral and opposite abutments.

2. Transfer machine according to Claim 1, characterized by the fact that the two kinematic units, comprising supports (2) for the drums (3) and multispindled (6) turrets (5) are supported directly by the horizontal surface of the work bench (1) and not by vertical lateral supports for said units.

3. Transfer machine according to Claim 1 characterized by the fact that thanks to the absence of side abutments, the space above and to the side of the machine is completely free, with no fixed structures and this space can be occupied by external manipulators.

4. Transfer machine according to Claim 1, characterized by the fact that in respect of the pieces being machined, carried by the blocking means (4) of one single drum (3) tooks carried by the spindles (6) of multi-spindled turrets (5) operate axially juxtaposed to the blocking means (4).

5. Transfer machine according to Claim 1, characterized by the fact that automatic loading (10) and unloading (11) devices for the pieces being machined can be associated.

6. Transfer machine according to Claims 1 and 4, characterized by the fact that the evacuation of the metal chips, especially long chips, can easily be carried out by the use of automatic evacuation devices, thanks to the absence of the unit-carrying side abutments.

7. Transfer machine according to any one of Claims 1 to 6, characterized by the fact that the entire perimeter of its work bench (1) has no fixed structures and therefore two or more machines can be positioned either side by side or in alignment in order to reduce the space occupied.
